# EUROPÄISCHE PATENTSCHRIFT

(11) **EP 1 136 426 B1**
(45) Veröffentlichungstag und Bekanntmachung des Hinweises auf die Patenterteilung: **23.08.2006**
(21) Anmeldenummer: 01105372.5
(22) Anmeldetag: 09.03.2001
(51) Int. Cl.: B66F 9/075, B62D 33/08, B62D 33/063

(54) **Gabelstapler mit hebbarer Fahrerkabine**
Lift-truck with raisable cab
Charot élévateur avec cabine relevable

(30) Priorität: 17.03.2000 DE 10013069
(43) Veröffentlichungstag der Anmeldung: 26.09.2001
(73) Patentinhaber: STILL GMBH, D-22113 Hamburg (DE)
(72) Erfinder: Bavendiek, Rainer, Dr. Dipl.-Ing., 21465 Wentorf (DE); Rademacher, Frank, Dipl.-Ing., 22143 Hamburg (DE); Jahns, Claus-Peter, Dipl.-Ing., 21107 Hamburg (DE)
(74) Vertreter: Kasseckert, Rainer

(56) Entgegenhaltungen:
- EP-A- 0 185 928
- WO-A-91/04221
- CH-A- 459 502
- DE-A- 19 815 123
- US-A- 3 252 546

## Beschreibung

Die Erfindung betrifft ein Flurförderzeug, insbesondere einen Gabelstapler, mit einem Chassis und einer Kabine, die an Führungen höhenverstellbar ist.

Ein derartiges Fluorförderzeug ist aus der US-A-3,252,546 bekannt.

Aus der DE-OS 198 15 123 A1 ist ein Stapler bekannt, dessen Kabine gegenüber dem Chassis höhenverstellbar ist. Die Höhenverstellung der Kabine kann z.B. über zwei in Fahrtrichtung nebeneinander stehende Hydraulikzylinder erfolgen. Tests haben jedoch gezeigt, daß es bei hochgehobener Kabine relativ schwierig ist, eine steife Verbindung zwischen Kabine und Rahmen zu halten. Insbesondere beim Überfahren von kleinen Unebenheiten oder beim starken Beschleunigen und Bremsen verstärkt die Anordnung mit den zwei nebeneinander stehenden Zylindern Schwenk- und Nickbewegungen der Kabine nach vorne und hinten. Dieses "Eigenleben" der Kabine kann bei empfindlichen Fahrern zu einer Art Seekrankheit führen.

Aus der Zeitschrift F+H Fördern und Heben 35 (1985) Nr. 3, Seiten 200 und 201 ist ein Gabelstapler bekannt, dessen Kabine über mehrere Meter höhenverstellt werden kann. Die Kabine befindet sich an einem eigenen Hubgerüst, das aus zwei in Fahrtrichtung nebeneinander stehenden Trägem besteht. Ob und wie stark die Nickbewegungen der Kabine gegenüber dem Chassis sind, ist dieser Literaturstelle nicht zu entnehmen.

Aus der Zeitschrift Materials Handling News, September 1991, Seiten 10 und 11 ist ein Gabelstapler mit anhebbarer Kabine bekannt, bei der die Kabine in zwei nebeneinander liegenden Führungen auf und ab gleiten kann. Auch diese Konstruktion mit den beiden in Fahrtrichtung nebeneinander stehenden Führungen scheint gegen Nickbewegungen der Kabine nach vorne oder hinten empfindlich zu sein.

Davon ausgehend ist es Aufgabe der Erfindung, einen Gabelstapler mit höhenverstellbarer Kabine vorzuschlagen, bei dem der Hubmechanismus für die Kabine vereinfacht und dadurch sicherer und kostengünstiger gemacht wird. Diese Aufgabe wird erfindungsgemäß durch die Kennzeichnenden Merkmale von Anspruch 1 gelöst. Durch die Verwendung von mehr als zwei Führungen gelingt es, eine steife Befestigung der Kabine nicht nur in einer Richtung, sondern gegenüber jeder störenden Bewegung (Nicken, Rollen, Schwenken) herzustellen. Die Kabine schwenkt nun also weder bei scharfen Kurvenfahrten stärker nach links oder rechts, noch rollt oder nickt sie deutlich nach vorne oder hinten, wenn das Fahrzeug scharf abbremst, beschleunigt, oder über Unebenheiten fährt. Die erfindungsgemäße steife Lagerung ist besonders wichtig, da Gabelstapler aus Stabilitätsgründen normalerweise kein gefedertes Fahrwerk haben, und deshalb schon kleine Unebenheiten der Fahrbahn zu Rahmenbewegungen führen. Neigbewegungen des Rahmens machen sich bei einer hochgehobenen Kabine wegen der längeren Hebelarme um so mehr bemerkbar. Die erfindungsgemäße Halterung verhindert, daß die Nickbewegung der Kabine größer ist als die Nickbewegung des Rahmens.

In einer bevorzugten Ausführung der Erfindung sind die Führungen Linearführungen, wobei z.B. die Schlitten fest am Rahmen befestigt sind und die Kabine mit Schienen ausgerüstet ist, die in diesen Schlitten verschiebbar sind. Es können alle an sich bekannten Linearführungen verwendet werden, wie Schlittenführungen, Rollenführungen, Kugelumlaufführungen, Schwalbenschwanzführungen, von Hubgerüsten her bekannte Führungen oder ähnliche.

Zum Heben und Senken der Kabine ist ein Hydraulikzylinder vorgesehen. Dadurch sind die Funktionen "Kabine heben/senken" und "Kabine führen" getrennt. Der Hydraulikzylinder muß damit keine Führungsaufgaben übernehmen und ist nur auf Zug und Druck belastet. Es kann also ein handelsüblicher Hydraulikzylinder verwendet werden, wobei sich zweiseitig wirkende Zylinder oder Differenzialzylinder besonders eignen. Der Hubzylinder kann an beliebiger Stelle angeordnet sein, zweckmäßig ist eine senkrechte Stellung direkt neben einer der Führungen, bei drei Führungen, z.B. neben der mittleren hinteren. Führt man den Hubzylinder als Differenzialzylinder aus, so kann die Kabine unabhängig von ihrem Eigengewicht in der Geschwindigkeit abwärts verfahren werden, die gewünscht ist und die der hydraulische Volumenstrom der Hydraulikpumpe zuläßt. Erfindungsgemäß sind die drei oder mehr Führungen an möglichst weit außen oder auseinanderliegenden Stellungen angeordnet, so daß sich für die Führung der Kabine möglichst lange Hebelarme ergeben, um die Kippmomente um alle drei Hauptachsen des Fahrzeugs möglichst gut aufnehmen zu können.

Anstelle von einem Hydraulikzylindern kann selbstverständlich auch ein pneumatisch angetriebener Zylinder oder hydropneumatischer Zylinder eingesetzt werden, wobei der Pneumatikzylinder oder der hydropneumatische Zylinder auch Federungsfunktionen übernehmen kann.

Bei einem Flurförderzeug mit elektrischem Antrieb, bei dem die Fahrzeugbatterie ein dominantes Bauelement bildet, kann eine geeignete Anordnung der Führungen so sein, daß zwei Führungen jeweils links und rechts direkt vor der Batterie und die dritte mittig hinter der Batterie angeordnet ist. Damit bleibt ausreichend Platz für die Anordnung der Batterie und eventuell auch Platz für ihr seitliches Wechseln zur Verfügung, während die Unterstützungsfläche für die Kabine relativ groß bleibt.

Die erfindungsgemäße Aufhängung ergibt eine extrem steife Lagerung der Kabine relativ zum Rahmen, wodurch auch in maximal ausgefahrener Position der Kabine, z.B. um 80 cm oder um ca. 1 m, und auch bei hoher Fahrdynamik eine stabile Lagerung erreicht wird. Diese ist für das Wohlbefinden des Bedieners des Fahrzeugs sehr wichtig, da empfindlichen Fahrern bei zu heftigen Nick- und Schwenkbewegungen unwohl werden kann.

Die Erfindung wird anhand dreier Figuren näher erläutert.

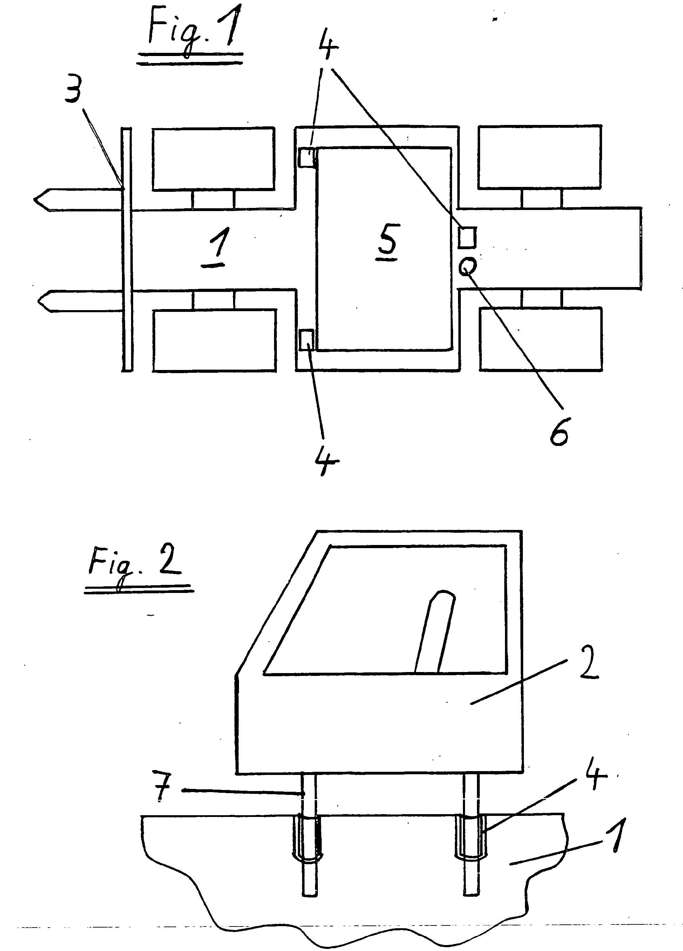

Figur 1 zeigt einen Staplerchassis 1 mit vier Rädern und einem Hubgerüst 3 an der Frontseite. Um die Fahrzeugbatterie 5 angeordnet sind hier drei Führungen 4, an denen die in dieser Figur nicht gezeigte Kabine auf- und abgleitet. Neben der hinteren Führung 4 ist der Hubzylinder 6 zum Heben und Senken der Kabine angeordnet. Wie in Figur 1 gut zu erkennen ist, sind die Führungen 4 weit voneinander entfernt, so daß eine stabile Lagerung der Kabine gewährleistet ist. Zwischen den Führungen 4 ist ausreichend Platz zur Aufnahme der großen Fahrzeugbatterie 5.
Figur 2 zeigte eine schematische Seitenansicht des erfindungsgemäßen Staplers, wobei sich auf dem Chassis 1 die Kabine 2 höhenverstellbar befindet. Die Kabine 2 ist dazu an ihrer Unterseite mit drei oder mehr Stäben 7 ausgerüstet, die in den Führungen 4 des Chassis 1 längsverschieblich geführt sind.

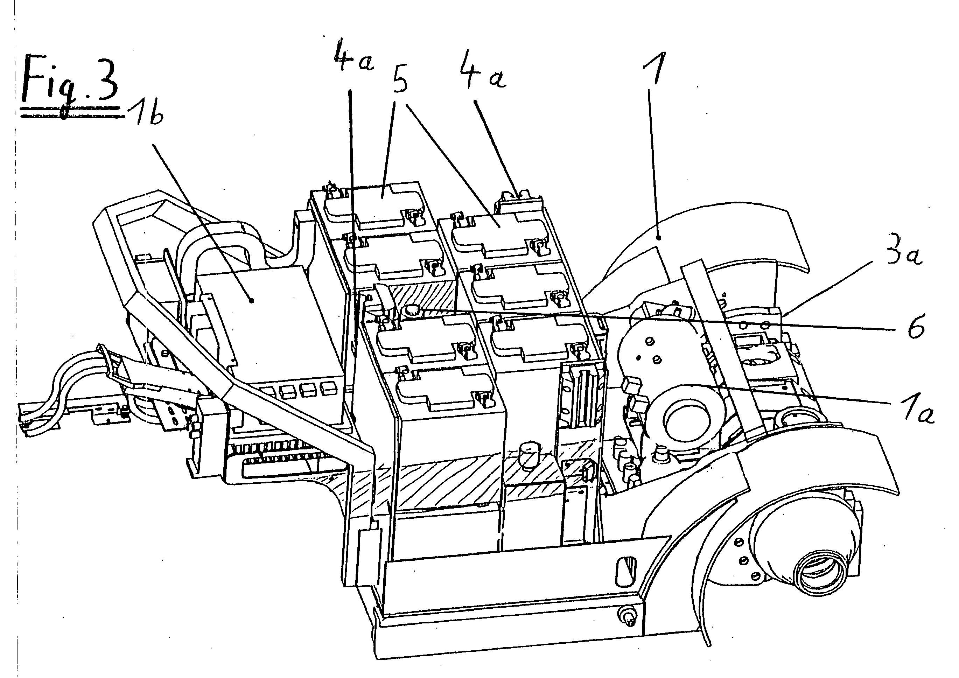

Figur 3 zeigt eine weitere Ausführungsform eines erfindungsgemäßen Gabelstaplers mit hebbarer Fahrerkabine. Figur 3 zeigt das Chassis 1 eines elektromotorisch betriebenen Gabelstaplers mit dem Elektromotor 1 a, der elektronischen Steuerung 1 b und den Batterien 5. Anstelle einer Batterie sind hier mehrere Batterieren 5 verwendet, die den für den Betrieb erforderlichen Strom speichern. Mit 3a sind die Befestigungselemente für das Hubgerüst bezeichnet.

Erfindungsgemäß ist das Staplerchassis 1 mit drei Schlitten 4a ausgestattet, wobei zwei Schlitten 4a links und rechts neben den Batterien 5 angeordnet sind und der dritte Schlitten 4a in der Mitte des Fahrzeugs hinten, angeordnet ist. Diese drei Schlitten 4a führen dann die Führungsstäbe, die aus der Kabine (nicht gezeigt) nach unten herausragen. In der Nähe des dritten Schlittens 4a befindet sich der Hubzylinder 6, der zum Heben und Senken der Kabine verwendet wird.

## Patentansprüche

1. Flurförderzeug, insbesondere Gabelstapler, mit einem Chassis (1) und einer Kabine (2), die an Zylindern oder Führungen (4) höhenverstellbar ist, mit mindestens drei, nicht in einer Ebene liegenden Linearführungen, **gekennzeichnet durch** einen einzigen Hubzylinder (6) zum Heben und Senken der Kabine (2), insbesondere einen zweiseitig wirkenden oder einen Differenzialzylinder.

2. Flurförderzeug mit elektrischem Antrieb nach einem der Ansprüche 1 bis 3, **dadurch gekennzeichnet, dass** zwei Führungen (4) vor und eine oder zwei Führungen (4) hinter der Batterie (5) angeordnet sind.

3. Flurförderzeug nach einem der vorhergehenden Ansprüche, **dadurch gekennzeichnet, dass** der Zylinder ein Hydraulikzylinder, ein Pneumatikzylinder oder ein hydropneumatischer Zylinder ist.

## Claims

1. Lift truck, in particular fork lift truck, with a chassis (1) and a cab (2), which may be adjusted in height on cylinders or guides (4), with at least three linear guides which are not located in one plane, **characterized by** a single lifting cylinder (6), in particular a double-action or differential cylinder, for raising and lowering the cab (2).

2. Lift truck with electrical drive according to any one of claims 1 to 3, **characterized in that** two guides (4) are arranged in front of the battery (5) and one or two guides (4) are arranged behind the battery (5).

3. Lift truck according to any one of the preceding claims, **characterized in that** the cylinder is a hydraulic cylinder, a pneumatic cylinder or a hydropneumatic cylinder.

## Revendications

1. Chariot de manutention, notamment chariot élévateur à fourche, comprenant un châssis (1) et une cabine (2) qui peuvent être positionnés en hauteur sur des vérins ou des guides (4), comprenant au moins trois guides linéaires ne se trouvant pas dans un même plan, **caractérisé par** un vérin de levage unique (6) pour lever et descendre la cabine (2), notamment un vérin à action bilatérale ou un vérin différentiel.

2. Chariot de manutention muni d'un mécanisme d'entraînement électrique selon l'une des revendications 1 à 3, **caractérisé en ce que** deux guides (4) sont disposés devant la batterie (5) et un ou deux guides (4) derrière.

3. Chariot de manutention selon l'une des revendications précédentes, **caractérisé en ce que** le vérin est un vérin hydraulique, un vérin pneumatique ou un vérin hydropneumatique.
